# EUROPEAN PATENT APPLICATION

(11) **EP 2 347 877 A1**
(43) Date of publication of application: **27.07.2011**
(21) Application number: 09821966.0
(22) Date of filing: 15.10.2009
(51) Int. Cl.: B29C 33/40, B29C 33/06, B29C 45/26, B29C 45/46

(54) **RESIN MOLDING RUBBER MOLD, RESIN MOLDING DEVICE, AND RESIN MOLDING METHOD**

(30) Priority: 21.10.2008 JP 2008271246
(71) Applicant: Techno Polymer Co., Ltd., Minato-ku Tokyo 105-0021 (JP); Nihon Rex Co., Ltd., Tokyo 160-0004 (JP)
(72) Inventor: KURIHARA Fumio, Tokyo 105-0021 (JP); TAKAMI Masamitsu, Tokyo 160-0004 (JP)
(74) Representative: Allgayer, Ulla Barbara
(86) International application number: PCT/JP2009/067847
(87) International publication number: WO 2010/047269

(57) **Abstract**

A rubber mold for molding a resin 2 is provided with a cavity 213 for filling therein a thermoplastic resin in a molten state by applying pressure. The rubber mold 2 includes a core mold 21 made of a rubber material and provided with the cavity 213 and a base mold 22 made of a rubber material and having such a shape that the core mold 21 is to be placed therein. The core mold 21 is formed by combining a pair of split mold parts 211 which is divided on splitting surfaces 212 for opening the cavity 213. The base mold 22 has a bottom part 221 and a pair of first side parts 222 formed on two opposite sides in a direction in which the plurality of split mold parts are aligned with each other.

## Description

### TECHNICAL FIELD

The present invention relates to a rubber mold for molding a resin, an apparatus for molding a resin, and a method for molding a resin each for obtaining a molded article of a thermoplastic resin.

### BACKGROUND ART

Methods for obtaining a molded resin article having a prescribed shape using a thermoplastic resin generally include various molding methods, such as injection molding, blow molding, extrusion molding, and press molding.

On the other hand, for example, patent document 1 discloses a method for molding a resin, which is capable of selectively heating a thermoplastic resin through a mold when molding a molded resin article made of a thermoplastic resin by a vacuum molding process using a mold made of rubber such as a silicone rubber (rubber mold). In this method for molding a resin, when filling a molten thermoplastic resin into a cavity of a mold, an electromagnetic wave including a wavelength region of from 0.78 to 2 µm is irradiated to the thermoplastic resin through the mold. In this case, it is possible to heat the thermoplastic resin more positively in comparison to the mold made of a rubber due to the difference in physical properties between the rubber constituting the mold and the thermoplastic resin.

For example, patent document 2 discloses an apparatus for molding a resin, the apparatus being capable of preventing the temperature of a filter for reducing the transmission amount of electromagnetic waves having wavelengths of 2 µm or more from rising by making a filter have such a constitution that water has been filled therein and circulating water.

Patent document 1: JP 2007-216447 A
Patent document 2: JP 2008-44271 A

### DISCLOSURE OF THE INVENTION

### PROBLEMS TO BE SOLVED BY THE INVENTION

However, since a mold made of a rubber such as a silicone rubber seriously suffers thermal degradation after its use for molding a thermoplastic resin because it is made of a rubber, its use in several tens shots (moldings) makes it necessary to be exchanged. Thus, the amount of a rubber material to be used for the production of molds becomes large.
In order to increase the dimensional accuracy of a molded article, after a thermoplastic resin is filled into a cavity of a mold, the pressure of the mold is kept for a prescribed period of time. Therefore, further ideas are required in order to prevent a mold from opening by a simple structure.

The present invention was devised in view of such existing problems and intends to provide a rubber mold for molding a resin, an apparatus for molding a resin, and a method for molding a resin which can reduce the amount of a rubber material to be used for the production of rubber molds for exchange and can prevent the opening of a rubber mold by a simple structure and thereby afford a molded article made of a thermoplastic resin and stable in dimensional accuracy.

### MEANS FOR SOLVING THE PROBLEMS

The first invention lies in a rubber mold for molding a resin provided with a cavity for filling a thermoplastic resin in a molten state thereinto by applying a pressure, which comprises a core mold made of a rubber material and provided with the aforementioned cavity, and a base mold made of a rubber material and having such a shape that the aforementioned core mold is to be placed therein, wherein the aforementioned core mold is formed by combining a plurality of split mold parts which are divided on splitting surfaces for opening the aforementioned cavity; and the aforementioned base mold has at least a bottom part and a pair of first side parts standing on two opposite side edges of the bottom part in a direction in which the plurality of split mold parts are aligned with each other.

The rubber mold for molding a resin of this invention is composed of a core mold and a base mold having such a shape that the core mold is to be placed therein.
A molten thermoplastic resin can be filled into the cavity formed in the core mold. This makes it possible to limit the object that suffers thermal degradation caused by the filling of the thermoplastic resin to the core mold, and a base mold can be used in a larger number of shots (moldings) than the core mold. Thus, it becomes possible to use a base mold for a longer time in comparison to a core mold, and it is possible to reduce the amount of the rubber material to be used newly for the production of rubber molds for exchange when exchanging a degraded rubber mold.

When molding many kinds of molded articles, core molds having cavities adjusted to the shapes of the respective molded articles are prepared and only core molds can be exchanged depending upon the respective kinds of articles while a base mold is commonly used. Also by this, it is possible to reduce the amount of the rubber material to be used newly for the production of rubber molds when exchanging a degraded rubber mold.

In the core mold of the rubber mold of this invention, a cavity can be formed easily by transferring the shape of a sample (master model) of a molded article. Thus, it is easy to form the cavity in the core mold.
Moreover, by having formed the pair of first side parts in the base mold on both sides in a direction in which the plurality of split mold parts are aligned with each other, it is possible to hold the plurality of split mold parts by the first side parts so that they may not open during the molding of a thermoplastic resin. As a result of this, it is possible to prevent the opening of the rubber mold by a simple structure and thereby increase the dimensional accuracy of a molded article obtained by cooling a thermoplastic resin in the cavity.

Therefore, by the use of the rubber mold for molding a resin of this invention, it is possible to reduce the amount used of a rubber material to be used for the production of rubber molds for exchange and also possible to prevent the opening of a rubber mold by a simple structure and thereby afford a molded article made of a thermoplastic resin and stable in dimensional accuracy.

The second invention lies in an apparatus for molding a resin comprising the aforementioned rubber mold for molding a resin and light generation means for generating light including a wavelength region of from 0.78 to 2 µm,
wherein the apparatus for molding a resin is configured so that the aforementioned thermoplastic resin to be filled into the aforementioned cavity may be heated by irradiating the aforementioned light from the surface of the aforementioned base mold by the aforementioned light generation means.

The apparatus for molding a resin of this invention irradiates light including a wavelength region of from 0.78 to 2 µm to the surface of the base mold when filling a thermoplastic resin into the cavity in the core mold of the rubber mold. At this time, it is possible to selectively heat the thermoplastic resin more in comparison to the core mold and the base mold due to the difference in physical properties between the rubber materials constituting the core mold and the base mold and the thermoplastic resin (it is possible to make the amount of heat larger in comparison to the rubber mold). By this, it is possible to inhibit the temperature rise of the core mold and the base mold and thereby heat the thermoplastic resin effectively. Thus, it is possible to prevent the thermal degradation of the core mold and the base mold more effectively when molding a molded article of a thermoplastic resin.

Both the core mold and the base mold constituting the rubber mold are constituted of rubber materials. Consequently, it is possible to allow the base mold to absorb most of the light of a wavelength to be absorbed by the core mold and thereby make the core mold less prone to be heated. In particular, in the case of constituting the core mold and the base mold of the same rubber material, it is considered to be possible to make the base mold absorb almost all light of a wavelength to be absorbed by the core mold.

Consequently, by the use of the apparatus for molding a resin of this invention, it is possible to prevent the opening of the rubber mold by a simple structure and prevent the thermal degradation of the rubber mold and, thereby, afford a molded article made of a thermoplastic resin and stable in dimensional accuracy.

The third invention lies in an apparatus for molding a resin comprising the aforementioned rubber mold for molding a resin, light generation means for generating light including a wavelength region of from 0.78 to 2 µm, vacuum means for performing vacuum suction in the aforementioned mold space, and water supply means for injecting the aforementioned cooling water into the aforementioned mold space,
wherein the apparatus for molding a resin is configured so that at the time of the filling of the aforementioned thermoplastic resin into the cavity, the vacuum suction in the aforementioned mold space is performed using the aforementioned vacuum means to perform mold clamping of the aforementioned plurality of split mold parts and the aforementioned light is irradiated by using the aforementioned light generation means from the surface of the base mold to heat the aforementioned thermoplastic resin to be filled into the aforementioned cavity, and after filling the aforementioned thermoplastic resin, the aforementioned cooling water is injected into the aforementioned mold space by using the aforementioned water supply means to cool the aforementioned core mold.

The apparatus for molding a resin of this invention performs vacuum suction in a mold space formed between the external surface in the core mold and the internal surface in the base mold by the vacuum means to perform mold clamping of the plurality of split mold parts when filling a thermoplastic resin into the cavity in the core mold of the rubber mold. By this, it is possible to prevent the plurality of split mold parts from opening even when pressure on filling a thermoplastic resin is applied to the plurality of split mold parts.
Moreover, by irradiating light including a wavelength region of from 0.78 to 2 µm from the surface of the base mold, it is possible to selectively heat a thermoplastic resin more in comparison to the core mold and the base mold. Accordingly, the temperature rise in the core mold and the base mold can be controlled so as to heat the thermoplastic resin effectively.

After filling the thermoplastic resin into the cavity, cooling water is injected into the mold space using the water supply means. Thanks to this, it cools the core mold and, in particular, it is possible to cool the thermoplastic resin that has been heated and melted, through the core mold. Thus, it is possible to shorten the time to be taken until taking out a molded article of the thermoplastic resin after cooling and, thereby, shorten the molding cycle of molded articles.

Consequently, the apparatus for molding a resin of this invention can effectively prevent the opening of the plurality of split mold parts constituting the core mold and, thereby, shorten the molding cycle of molded articles of a thermoplastic resin. Moreover, also in this invention, like the aforementioned second invention, it is possible to prevent the opening of the rubber mold by a simple structure and prevent the thermal degradation of the rubber mold effectively and, thereby, afford a molded article made of a thermoplastic resin and stable in dimensional accuracy. Also in this invention, the same operational effect as those in the aforementioned second invention can be obtained in other aspects.

The fourth invention lies in a method for molding a resin, wherein the method comprises using an apparatus for molding a resin comprising the aforementioned rubber mold for molding a resin and light generation means for generating light including a wavelength region of from 0.78 to 2 µm, and performing a heating step of irradiating the aforementioned light by using the aforementioned light generation means from the surface of the aforementioned base mold to heat the aforementioned thermoplastic resin to be filled into the aforementioned cavity.

In the method for molding a resin of this invention, by the same constitution as that of the aforementioned second invention, it is possible to effectively prevent the opening of the rubber mold by a simple structure and prevent the thermal degradation of the rubber mold and, thereby, afford a molded article made of a thermoplastic resin and stable in dimensional accuracy.

The fifth invention lies in a method for molding a resin, wherein the method comprises using an apparatus for molding a resin comprising the aforementioned rubber mold for molding a resin, light generation means for generating light including a wavelength region of from 0.78 to 2 µm, vacuum means for performing vacuum suction in the aforementioned mold space, and water supply means for injecting the aforementioned cooling water into the aforementioned mold space, and
performing a heating step of, at the time of the filling of the aforementioned thermoplastic resin into the aforementioned cavity, performing the vacuum suction in the aforementioned mold space by using the aforementioned vacuum means to perform mold clamping of the aforementioned plurality of split mold parts and irradiating the aforementioned light by using the aforementioned light generation means from the surface of the aforementioned base mold to heat the aforementioned thermoplastic resin to be filled into the aforementioned cavity and, subsequently performing a cooling step of, after filling the aforementioned thermoplastic resin, injecting the aforementioned cooling water into the aforementioned mold space by using the aforementioned water supply means to cool the aforementioned core mold.

By the method for molding a resin of this invention, by the same constitution as that of the aforementioned third invention, it is possible to effectively prevent the opening of the plurality of split mold parts constituting the core mold and, thereby, shorten the molding cycle of molded articles of a thermoplastic resin. Moreover, also in this invention, like the aforementioned third invention, it is possible to prevent the opening of the rubber mold by a simple structure and prevent the thermal degradation of the rubber mold and, thereby, afford a molded article made of a thermoplastic resin and stable in dimensional accuracy.

### BRIEF DESCRIPTION OF THE DRAWINGS

Fig. 1 is a sectional explanatory diagram illustrating a rubber mold for molding a resin in an Example to which vacuum means is connected, viewed from the direction of the second side part.
Fig. 2 is a sectional explanatory diagram illustrating the state of the formation of a mold space in the rubber mold in the Example, viewed from the direction of the first side part.
Fig. 3 is a sectional explanatory diagram illustrating a rubber mold for molding a resin in the Example, viewed from above.
Fig. 4 is an explanatory diagram illustrating the rubber mold for molding a resin in the Example in a state in which the core mold is detached from the base mold.
Fig. 5 is a sectional explanatory diagram illustrating an apparatus for molding a resin in the Example including a rubber mold for molding a resin, viewed from the direction of the second side part.
Fig. 6 is a sectional explanatory diagram illustrating a rubber mold for molding a resin in the Example to which water supply means is connected, viewed from the direction of the second side part.
Fig. 7 is a graph showing the transmittance of light in a silicone rubber in the Example.

### BEST MODE FOR CARRYING OUT THE INVENTION

Preferred embodiments in the aforementioned first to fifth inventions are described. In the first invention, the light (electromagnetic wave) to be irradiated to the aforementioned thermoplastic resin through the aforementioned rubber mold may contain not only light having a wavelength within the range of from 0.78 to 2 µm but also light of other range. In this case, it is preferred that the light to be irradiated to the thermoplastic resin through the rubber mold contain light having a wavelength within the range of from 0.78 to 2 µm more than light of other range.

The aforementioned plurality of split mold parts can be a pair of split mold parts and also may be three or more split mold parts. The split mold parts are not necessary to be split into symmetrical shapes and can be split by various splitting surface (e.g., wavy splitting surface, sawtooth splitting surface, and irregular splitting surface).

The pair of first side parts in the aforementioned based mold are not necessarily be required to cover throughout the external surface in a direction in which the plurality of split mold parts are aligned with each other and also may cover part of the external surface.

In the second to fifth inventions, the aforementioned light generation means may be used not only singly but also as a combination of two or more sets thereof. In other words, it is preferred to irradiate light from both sides, or from the left side, the right side, the top, and the bottom in some cases depending upon the shape of a molded article (or cavity).

The aforementioned thermoplastic resin is preferably a non-crystalline thermoplastic resin.
Incidentally, since the mold is made of rubber, the cooling rate of a thermoplastic resin is lower in comparison to the case of a metal mold. Thus, the crystallinity of a thermoplastic resin may increase in the course of cooling and this may result in the decrease in the dimensional accuracy of a molded resin article or the decrease in the impact resistance of a molded resin article. In contrast to this, by the adoption of a non-crystalline thermoplastic resin as the thermoplastic resin, it is possible to prevent the reduction in the dimensional accuracy, the resistance, and so on of the molded resin article.

As the non-crystalline thermoplastic resin, there can be used, for example, styrene-based resins such as a styrene acrylonitrile copolymer, a styrene maleic anhydride copolymer, and a styrene methyl methacrylate copolymer; rubber-modified thermoplastic resins such as an ABS resin (an acrylonitrile butadiene styrene resin), an AES resin (an acrylonitrile ethylene-propylene-diene styrene resin), and an ASA resin (an acrylate styrene acrylonitrile resin); or polymethyl methacrylate, polycarbonate resin (PC), PC/rubber-modified thermoplastic resin alloys, and so on. Among these, it is particularly preferred to use a rubber-modified thermoplastic resin.

The rubber-modified thermoplastic resin is not particularly restricted, and preferred is one containing one or two or more polymers resulting from graft-polymerizing a vinyl-based monomer in the presence of a rubber polymer.
The aforementioned rubber polymer is not particularly restricted, and examples thereof include polybutadiene, a butadiene styrene copolymer, a butadiene acrylonitrile copolymer, an ethylene propylene copolymer, an ethylene propylene non-conjugated diene copolymer, an ethylene butene-1 copolymer, an ethylene butene-1 non-conjugated diene copolymer, an acrylic rubber, and a silicone rubber; these may be used singly or two or more of them may be used in combination.

As the aforementioned rubber polymer, it is preferred to use polybutadiene, a butadiene styrene copolymer, an ethylene propylene copolymer, an ethylene propylene non-conjugated diene copolymer, or an acrylic rubber, and as the aforementioned rubber-modified thermoplastic resin, an ABS resin, an AES resin, an ASA resin, and the like can be used. Among these, it is more preferred to use an ABS resin, in particular.

The aforementioned rubber mold is preferred to be made of a silicone rubber.
In this case, it is easy to produce a rubber mold and it is possible to heat a thermoplastic resin selectively with hardly heating a rubber mold by light including the aforementioned wavelength range of from 0.78 to 2 µm.
The hardness of the silicone rubber is preferably from 25 to 80 in JIS-A standard measurement.

In the second to fifth inventions, the reason why a thermoplastic resin can be heated selectively more in comparison to a rubber mold by light including the aforementioned wavelength range of from 0.78 to 2 µm seems as follows.
That is, it is considered that the light including a wavelength region of from 0.78 to 2 µm irradiated to the surface of a rubber mold is allowed to pass through the rubber mold to be absorbed by the thermoplastic resin in a proportion higher than a proportion in which it is absorbed by the rubber mold. Therefore, it is considered that the light energy of the light including the wavelength region of from 0.78 to 2 µm is absorbed preferentially by the thermoplastic resin, so that the thermoplastic resin can be heated selectively.

In the first invention, it is preferred that the aforementioned base mold has a pair of second side parts standing on two opposite side edges of the bottom parts to form a quadrangular frame in combination with the pair of first side parts so as to surround the bottom part.
In this case, it is possible to form the base mold in a box-like shape and it is possible to prevent the opening of the plurality of slit mold parts in the core mold more effectively.

It is preferred to form a mold space for performing at least one of vacuum suction for preventing the mold opening of the plurality of split mold parts and the injection of cooling water for cooling the plurality of split mold parts between the external side surface of the plurality of split mold parts in the core mold and the internal side surface of the pair of first side parts in the base mold and form the mold space while leaving a contact part where the contact state of the aforementioned external side surface with the internal side surface of the aforementioned pair of first side parts is maintained.
In this case, vacuum suction in the mold space is performed when filling a thermoplastic resin into the cavity in the core mold of the rubber mold. It is possible to make a force that pushes the core mold is acted on the base mold by producing a state in which the mold space is in a vacuum state and the pressure of the periphery of the base mold is the atmospheric pressure or more. By this, it is possible to perform mold clamping of the plurality of split mold parts. Thus, it is possible to prevent a plurality of split mold parts from opening even when a pressure at filling a thermoplastic resin is applied to the plurality of split mold parts.
At the time of performing the aforementioned mold clamping, it is possible to keep the contact state of the external side surface in the core mold with the internal side surface of the pair of first side parts by the aforementioned contact part.

In this case, cooling water is injected into the mold space after the filling of the thermoplastic resin into the cavity has been done. By this, it is possible to cool the core mold and, in particular, it is possible to cool a thermoplastic resin molten by heating through the core mold. Thus, it is possible to shorten the time to be taken until taking out a molded article of the thermoplastic resin after cooling and shorten the molding cycle of molded articles.

When the mold space is used as a space into which cooling water is injected, the mold space can be configured so that the cooling water may be circulated therein. It is also permissible to keep the upper part of the mold space opened and allow the cooling water injected from a lower part of the mold space to flow over the upper part.
Inside the base mold may be disposed a rubber spacer adjacent to the core mold. In this case, it is possible to prevent a space from being formed in the base mold by changing the thickness of the spacer even if the core mold varies in size.

It is preferred that an injection port for injecting the thermoplastic resin into the cavity be provided in an upper position of the splitting surface of the plurality of split mold parts.
In this case, it is possible to inject a thermoplastic resin into the cavity through the injection port and take out a molded article formed in the injection port integrally with a molded article of the thermoplastic resin formed in the cavity.

In the second and third inventions, it is preferred that the aforementioned apparatus for molding a resin has holding means for holding the external surface of the aforementioned pair of first side parts in the aforementioned base mold and an injection nozzle for injecting the aforementioned thermoplastic resin into the aforementioned cavity.
In this case, it is possible to more effectively prevent the plurality of split mold parts from opening through the base mold by the holding means. It is possible to inject a thermoplastic resin by the injection nozzle at a prescribed pressure into the cavity.

In the fourth and fifth invention, it is preferred, in the aforementioned heating step, to charge a thermoplastic resin in a particle state into the aforementioned cavity, subsequently irradiate the aforementioned light from the surface of the aforementioned base mold by the aforementioned light generation means, thereby heating the thermoplastic resin in the aforementioned particle state in the aforementioned cavity to melt, and subsequently fill a thermoplastic resin in a molten state into a space remaining in the aforementioned cavity.
In this case, when molding a molded article of a thermoplastic resin, a thermoplastic resin in a particle state and a thermoplastic resin in a molten state are used. The thermoplastic resin in a particle state is first charged into the cavity and heated to melt, and then the thermoplastic resin in a molten state is filled into the space remaining in the cavity. By this, it is possible to place a thermoplastic resin in a particle state in a tip part, a fine part, and so on of the cavity into which it is difficult to fill a thermoplastic resin, and heat it to melt. By controlling the filling pressure of a thermoplastic resin in a molten state to be low, it is possible to fill the thermoplastic resin to the entire part of the cavity. Thus, it is possible to prevent the plurality of split mold parts from opening more effectively and it is possible to form a molded thermoplastic resin article superior in dimensional accuracy.

### EXAMPLES

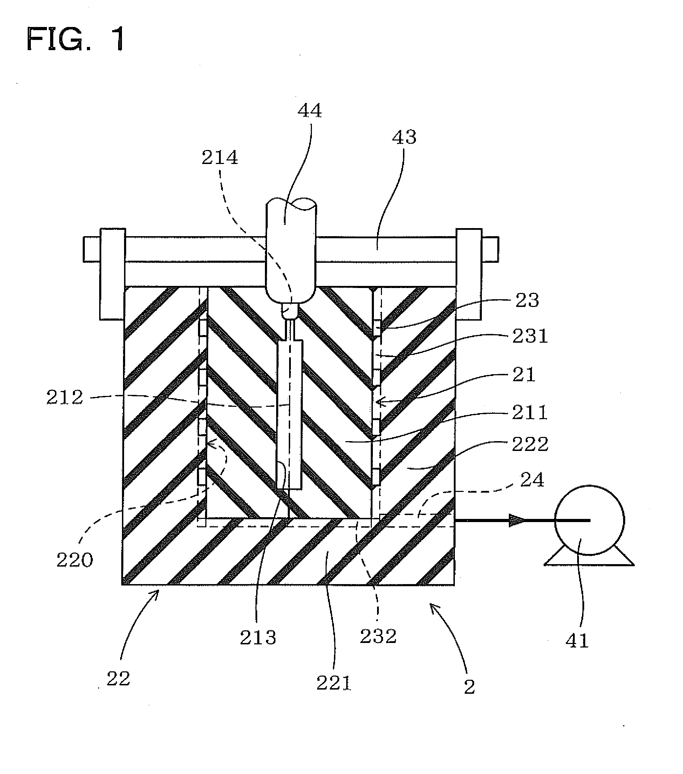

Hereinafter, an example concerning the rubber mold for molding a resin, the apparatus for molding a resin, and the method for molding a resin of the present invention is described with reference to drawings.
The rubber mold for molding a resin 2 of this example is provided with a cavity 213 for filling a thermoplastic resin 5 in a molten state thereinto by applying pressure as illustrated in Fig. 1 through Fig. 4. The rubber mold 2 is composed of a core mold 21 being made of a rubber material and provided with the cavity 213, and a base mold 22 being made of a rubber mold and having such a shape that the core mold 211 is to be placed in the inside part 220. The core mold 21 has been formed by combining a plurality of split mold parts 211 (a pair of split mold parts 211 in this example) together on splitting surfaces 212 for opening the cavity 213. The base mold 22 has at least a bottom part 221 and a pair of first side parts 222 standing from two opposite side edges of the bottom part 221 and the pair of first side parts 222 have been formed on both sides in a direction in which the plurality of split mold parts are aligned with each other.

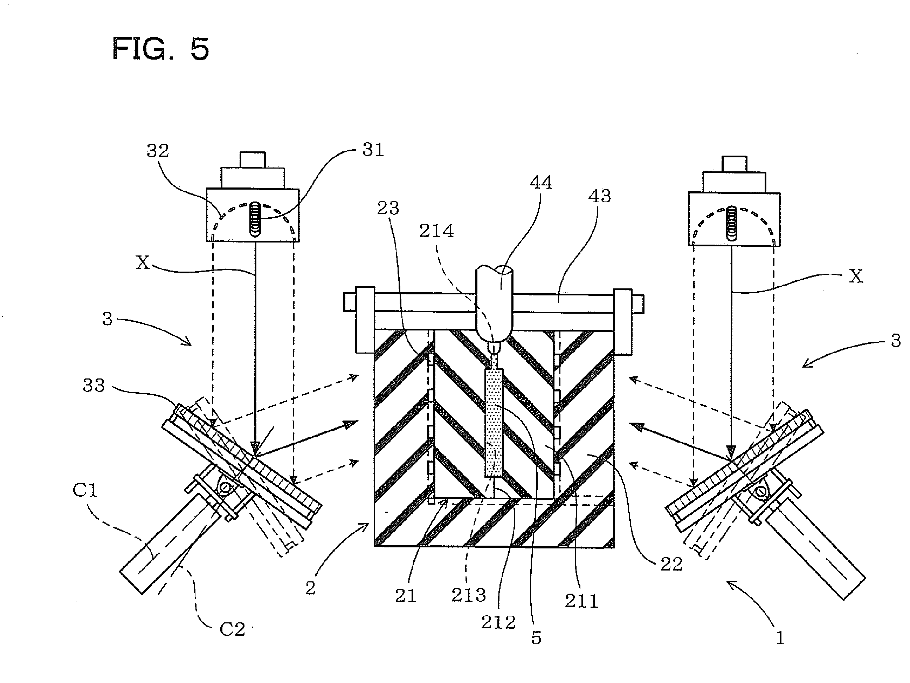

The apparatus for molding a resin 1 of this example has been constituted while having a rubber mold for molding a resin 2 and light generation means 3 for generating light including a wavelength region of from 0.78 to 2 µm as illustrated in Fig. 5. The apparatus for molding a resin 1 has been constituted so as to irradiate light including a wavelength region of from 0.78 to 2 µm from the surface of the base mold 22 by the light generation means 3 and thereby heat a thermoplastic resin 5 to be filled into the cavity 213. The method for molding a resin forms a molded article of the thermoplastic resin 5 by the use of the same constitution as that of the apparatus for molding a resin 1.

Hereinafter, the rubber mold for molding a resin 2, the apparatus for molding a resin 1, and the method for molding a resin of this example are described in detail with reference to Fig. 1 through Fig. 7.
The rubber mold for molding a resin 2 of this example is made of a silicone rubber as the rubber material. This rubber mold 2 can be produced by placing a master model (a hand-made real product or the like) of a molded article to be molded in liquid silicone rubber, curing the silicone rubber, and taking out the master model from the cured silicone rubber. Since the rubber mold 2 is made of rubber, a splitting surface (parting surface) 212 for the mold opening at the time of taking out a molded article after molding can be formed easily and optionally.
In this example, an ABS resin, which is a non-crystalline thermoplastic resin and also is a rubber-modified thermoplastic resin, is used as the thermoplastic resin 5.

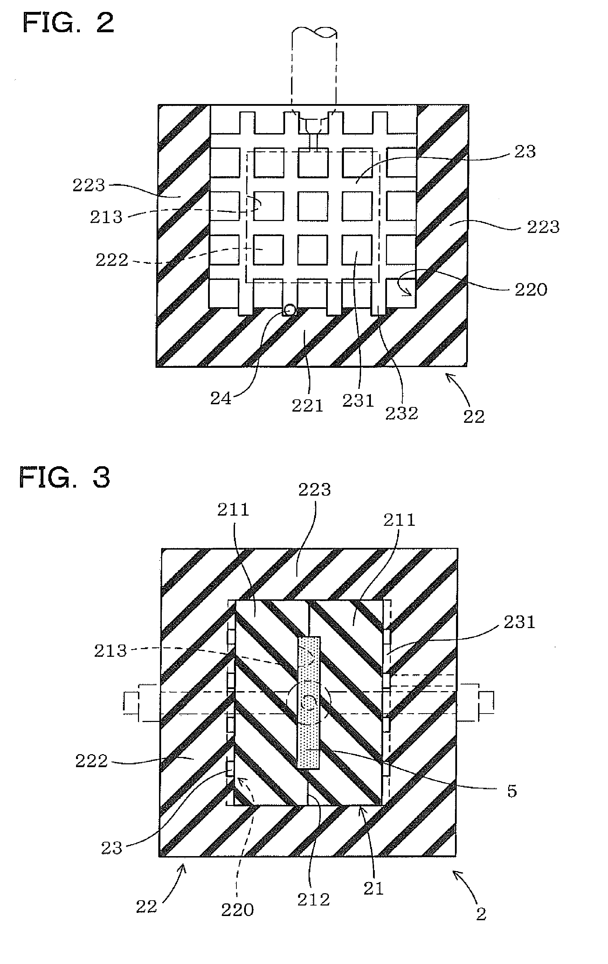

As illustrated in Fig. 3, the base mold 22 of this example has been formed in a quadrangular frame shape such that a bottom part 221 is surrounded by a remaining pair of second side parts 223 standing from the remaining two opposite side edges of the bottom part 221 together with a pair of first side parts 222. The base mold 22 of this example has been formed in a size such that the bottom part 221, the first side parts 222, and the second side parts 223 are in firm contact with the bottom surface and four external surfaces of the core mold 21.
In the inside part 220 of the base mold 22, it is also permissible to place a spacer made of a silicone rubber as a rubber material next to the core mold 21 and thereby bring the base mold 22 into firm contact with the core mold 21.

As illustrated in Fig. 1 through Fig. 3, in the rubber mold 2 of this example, a mold space 23 for performing vacuum suction for preventing the mold opening of a pair of split mold parts 211 and the injection of cooling water W for cooling the pair of split mold parts 211 has been formed between the external side surface in a direction in which the plurality of split mold parts are aligned with each other and the internal side surface of a pair of first side parts 222 in the base mold 22. This mold space 23 has been formed while leaving a contact part 231 where a contact state of the external side surface in the core mold 21 with the internal side surface of the pair of first side parts 222 is maintained.

The mold space 23 of this example has been constituted by latticed grooves formed in a vertical direction and a horizontal direction perpendicular thereto. The contact part 231 has been formed as a remaining part left between the grooves constituting the latticed grooves. The mold space 23 of this example has been formed on the internal surface in the pair of first mold parts 222 of the base mold 22. The mold space 23 of this example has been formed as a stopping space that stops the upper gap between the core mold 21 and the base mold 22 when the core mold 21 is placed in the inside part 220 of the base mold 22.

The mold space 23 can be constituted not only of latticed grooves but also of, for example, grooves formed so that part of the internal surface in the first side parts 222 may be in contact with the external surface of the core mold 21. The opposite mold spaces (latticed grooves) 23 formed on the pair of first side parts 222 are interconnected by lower grooves 232 formed on the bottom part 221 of the base mold 22.
The base mold 22 has been formed with a connection hole 24 that connects the mold space 23 with the outside of the base mold.

As described above, the base mold 22 of this example has been formed in a quadrangular shape from a pair of first side parts 222 and a pair of second side parts 223. Therefore, in order to make it easy to take out the core mold 21 from the base mold 22, the bottom part of the base mold 22 may be provided with a hold for taking out (not shown).

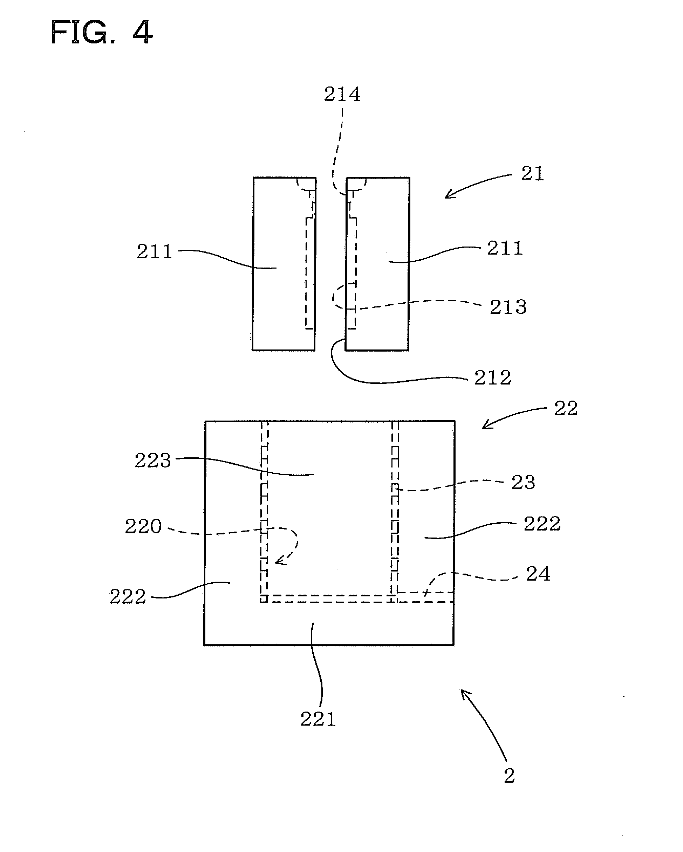

As illustrated in Fig. 1 and Fig. 4, at an upper position of the splitting surfaces 212 in a pair of split mold parts 211 has been formed an injection port 214 for injecting therethrough a thermoplastic resin 5 into a cavity 213. This injection port 214 has been formed across both the paired split mold parts 221. The molded object molded in the injection port 214 by injecting the thermoplastic resin 5 through the injection port 214 into the cavity 213 can be taken out integrally with the molded article of the thermoplastic resin 5 molded in the cavity 213.

As illustrated in Fig. 5, the apparatus for molding a resin 1 of this example has the aforementioned rubber mold for molding a resin 2, the aforementioned light generation means 3, vacuum means 41 for performing vacuum suction in a mold space 23, water supply means 42 for injecting cooling water W into the mold space 23, a holding means 43 for holding the external surfaces of a pair of first side parts 222 in the base mold 22, and an injection nozzle 44 for injecting a thermoplastic resin 5 into the cavity 213.
The light generation means 3 of this example has been constituted by using a halogen lamp 31 that emits light including a wavelength region of from 0.78 to 2 µm (corresponding approximately to the wavelength region of near infrared rays). As this halogen lamp 31, one having a peak of light intensity within a wavelength region of from 0.78 to 2 µm (about 0.9 µm in this example) was used. In Fig. 5, the distribution direction of light is shown by arrow X.

The light generation means 3 of this example has a halogen lamp (light source) 31 that emits light including a wavelength region of from 0.78 to 2 µm, a reflector 32 that distributes and reflects the light emitted from the halogen lamp 31, and an intermediate reflecting mirror 33 for further reflecting the light reflected from the reflector 32 to lead to the rubber mold 2. The intermediate reflecting mirror 33 has been constituted rotatably and the reflection surface thereof points to direction C2 that leans with respect to the rotation center axis C1 for rotating the intermediate reflection mirror 33.
The light generation means 3 has been constituted in such a manner that the light distributed and reflected from the reflector 32 is led to the intermediate reflection mirror 33 and the light reflected by the intermediate reflection mirror 33 is irradiated to the rubber mold 2 along a circle by rotating the intermediate reflection mirror 33 around the rotation center axis C1.

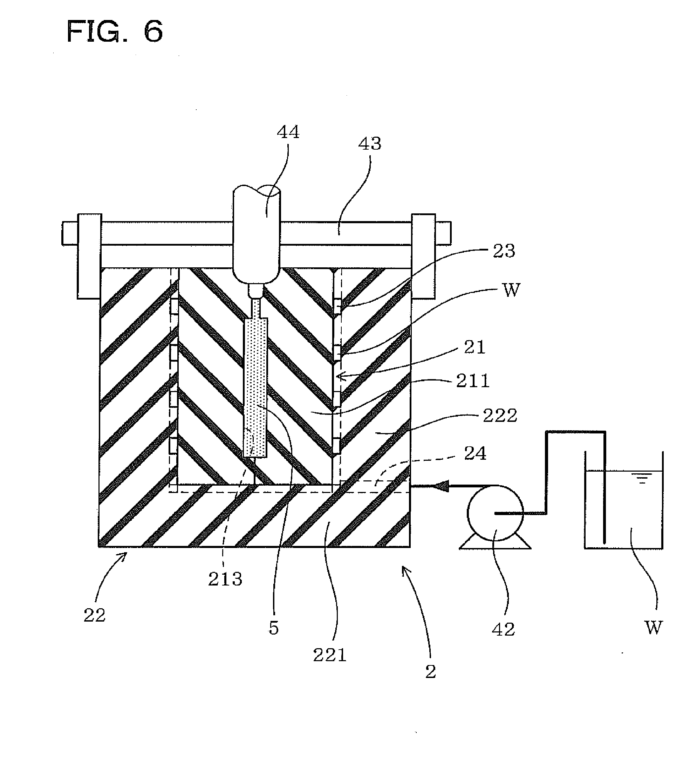

As illustrated in Fig. 1, the vacuum means 41 of this example has been constituted of a vacuum pump and the vacuum pump is connected to the connection hole 24 in the base mold 22.
As illustrated in Fig. 6, the water supply means 42 of this example has been constituted of a water supply pump and it is connected, in exchange for the vacuum pump, to the connection hole 42 in the base mold 22. The cooling water W injected by the water supply means 42 into the mold space 23 can be allowed to flow out through the connection hole 24 or alternatively allowed to flow out through another connection hole formed in addition to the connection hole 24.

As illustrated in Fig. 1, the holding means 43 of this example has been constituted so as to hold upper parts of the external surfaces of the pair of first side parts 222. The injection nozzle 44 of this example has been constituted in such a manner that it is placed in the injection port 214 in the core mold 21 and it injects a thermoplastic resin 5 in a molten state at a prescribed pressure (for example, a pressure of from 0.2 to 10 MPa) into the cavity 213. In this example, in the injection port 214 in the core mold 21 may be provided also a charging nozzle for charging a thermoplastic resin 5 in a particle state into the cavity 213 (not shown).

The apparatus for molding a resin 1 of this example has been constituted in such a manner that when filling a thermoplastic resin 5 into the cavity 213, mold clamping of the pair of slit mold parts 211 is done by performing vacuum suction in the mold space 23 by the vacuum means 41 as illustrated in Fig. 1 and light including a wavelength region of from 0.78 to 2 µm is irradiated from the surface of the base mold 22 by the light generation means 3 and thereby heat the thermoplastic resin 5 to be filled into the cavity 213, and after filling the thermoplastic resin 5, cooling water W is injected into the mold space 23 by the water supply means 42 to cool the core mold 21 as illustrated in Fig. 6.

Although illustration is omitted, a filter that reduces the transmission amount of light having a wavelength of longer than 2 µm may be placed between the light generation means 3 and the rubber mold 2. This filter may be constituted of quartz or the like. In this case, it is possible to make light having a wavelength of longer than 2 µm that is easily absorbed by the rubber mold 2 less prone to be irradiated to the rubber mold 2 by the use of the filter, and thus it is possible to prevent the temperature rise of the rubber mold 2 more effectively.

Although illustration is omitted, the split mold parts 221 may be divided into three or more parts depending upon the shape of the molded article of the thermoplastic resin 5 to be molded. For example, one of the paired split mold parts 211 can further be split. When a pair of first side parts 222 and a pair of second side parts 223 have been formed, it is permissible not only to split the split mold parts by forming a splitting surfaces 212 in a direction in which the first side parts 222 face each other but also to split the split mold parts by forming a splitting surface 212 in a direction in which the second side parts 223 face each other.

Next, the method for molding a resin using the aforementioned rubber mold for molding a resin 2 and the operation and effect afforded by this example are described.
As a heating step, a core mold 21 is placed in the inside part 220 of a base mold 22 as illustrated in Fig. 4 and vacuum means 41 is connected to a connection hole 24 of the base mold 22 as illustrated in Fig. 1 and vacuum suction of a mold space 23 is carried out. When the inside of the mold space 23 has come into a vacuum state, it is possible to act a force that pushes the core mold 21 to the base mold 22 by bringing the pressure of the periphery of the base mold 22 into an atmospheric pressure state. By this, it is possible to perform mold clamping of the pair of split mold parts 211. Even when a pressure at the time of the filling of the thermoplastic resin 5 is applied to the pair of split mold parts 211, it is possible to prevent the pair of split mold parts 221 from opening.
When the core mold 21 has been placed in the inside part 220 of the base mold 22, a pair of first side parts 222 in the base mold 22 are held by holding means 43. Thus, it is possible to effectively prevent the pair of split mold parts 211 from opening.

Next, although illustration is omitted, an charging nozzle is provided in an injection port 214 of the core mold 21 and a thermoplastic resin 5 in a particle state is charged from the charging nozzle into a cavity 213. Subsequently, light including a wavelength region of from 0.78 to 2 µm is irradiated from the surface of the base mold 22 by light generation means 3 as illustrated in Fig. 5 and thereby the thermoplastic resin 5 in a particle state is heated to melt in the cavity 213.
Then, a thermoplastic resin 5 in a molten state is filled into the space left in the cavity 213. By this, it is possible to reduce the amount of the thermoplastic resin 5 in a molten state to be newly filled and also possible to reduce the filling pressure of the thermoplastic resin 5 in a molten state. Thus, it is possible to more effectively prevent a pair of split mold parts 211 from opening and also possible to mold a molded article of the thermoplastic resin 5 superior in dimensional accuracy.

When having irradiated the light including a wavelength region of from 0.78 to 2 µm from the surface of the based mold 22, it is possible to selectively heat the core mold 21 more in comparison to the core mold 21 and the base mold 22 due to the difference in physical properties between the rubber materials constituting the core mold 21 and the base mold 22 and the thermoplastic resin 5 (it is possible to make the heating amount of the thermoplastic resin 5 larger in comparison to the rubber mold 2). By this, it is possible to inhibit the temperature rise of the core mold 21 and the base mold 22 and thereby heating the thermoplastic resin 5 effectively. Thus, when molding a molded article of the thermoplastic resin 5, it is possible to prevent the thermal degradation of the core mold 21 and the base mold 22 effectively.

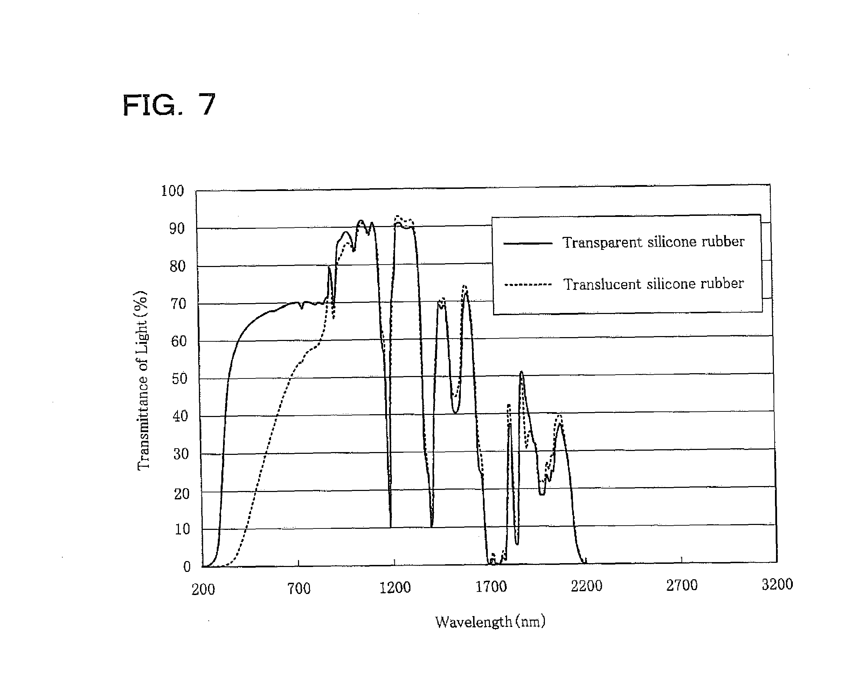

Here, Fig. 7 is a graph showing the transmittance of light in respective silicone rubbers of a transparent silicone rubber and a translucent silicone rubber with wavelength (nm) as a abscissa against transmittance (%) of light as ordinate. This figure shows that the respective silicone rubbers allow light having a wavelength between 200 and 2200 (nm) to pass. Therefore, by irradiating near infrared rays having a wavelength within this region to the surface of a rubber mold 2 made of a silicone rubber, it is possible to allow most of the near infrared rays to pass through the rubber mold 2 and allow them to be absorbed by the thermoplastic resin 5.

Subsequently, as illustrated in Fig. 6, the heating by the light generation means 3 is stopped after the filling of the thermoplastic resin 5, water supply means 42 is connected, in exchange for the vacuum means 41, to the connection hold 24 of the base mold 22 and cooling water W is injected by the water supply means 42 into the mold space 23 to cool the core mold 21 as a cooling step. By this, in particular, it is possible to cool the thermoplastic resin 5 melted by heating through the core mold 21. Thus, it is possible to shorten the time to be taken until taking out a molded article of the thermoplastic resin 5 after cooling and, thereby, shorten the molding cycle of molded articles.
The molded article in the cavity 213 can be taken out by removing the core mold 21 from the base mold 22 and then opening the pair of split mold parts 211 constituting the core mold 21.

As described above, the rubber mold 2 of this example is composed of the core mold 21 and the base mold 22 having such a shape that the core mold 21 is to be placed in the inside part 220.
A thermoplastic resin 5 in a molten state can be filled into the cavity 213 formed in the core mold 21. By this, it is possible to limit the object that suffers thermal degradation caused by the filling of the thermoplastic resin 5 to the core mold 21 and, thereby, the base mold 22 can be used in a larger number of shots (moldings) than the core mold 21. As a result, it becomes possible to use the base mold 22 for a longer time in comparison to the core mold 21 and it is possible to reduce the amount of the rubber material to be used newly for the production of rubber molds 2 for exchange when exchanging a degraded rubber mold 2.

When molding many kinds of molded articles, core molds 21 having cavities 213 adjusted to the shapes of the respective molded articles are prepared and only core molds 21 can be exchanged depending upon the respective kinds of articles while a base mold 22 is commonly used. Also by this, it is possible to reduce the amount of the rubber material to be used newly for the production of rubber molds 2 when exchanging a degraded rubber mold 2.

In the core mold 21 of the rubber mold 2 of this example, the cavity 213 can be formed easily by transferring the shape of a sample (master model) of a molded article. Thus, it is easy to form the cavity 213 in the core mold 21.
Moreover, by having formed the pair of first side parts 222 in the base mold 22 on both sides in a direction in which the plurality of split mold parts are aligned with each other, it is possible to hold the pair of split mold parts 211 by the first side parts 222 so that they may not open during the molding of a thermoplastic resin 5. As a result of this, it is possible to prevent the opening of the rubber mold 2 by a simple structure and thereby increase the dimensional accuracy of a molded article obtained by cooling the thermoplastic resin 5 in the cavity 213.

In the rubber mold 2 of this example, the core mold 21 and the base mold 22 have been constituted of the same rubber material, i.e. silicone rubber. Therefore, it is considered that the base mold 22 acts as a filter, so that it is possible to make the base mold 22 to absorb almost all light of a wavelength to be absorbed by the core mold 21. By this, it is possible to make the core mold 21 less prone to be heated.

For this reason, by the use of the rubber mold for molding a resin 2 of this example, and the apparatus for molding a resin 1 and the method for molding a resin each using this rubber mold, it is possible to reduce the amount of the rubber material to be used for the production of rubber molds 2 for exchange and it is also possible to prevent the opening of the rubber mold 2 by a simple structure and prevent the thermal degradation of the rubber mold 2 and, thereby, afford a molded article made of a thermoplastic resin 5 and stable in dimensional accuracy. The molding cycle of molded articles of the thermoplastic resin 5 can be shortened.

## Claims

1. A rubber mold for molding a resin provided with a cavity for filling a thermoplastic resin in a molten state thereinto by applying pressure, comprising:
a core mold made of a rubber material and provided with the cavity; and
a base mold made of a rubber material and having such a shape that the core mold is to be placed therein,
wherein the core mold is formed by combining a plurality of split mold parts which are divided on splitting surfaces for opening the cavity; and
the base mold has at least a bottom part and a pair of first side parts standing on two opposite side edges of the bottom part in a direction in which the plurality of split mold parts are aligned with each other.

2. The rubber mold for molding a resin as set forth in Claim 1, wherein the base mold has a pair of second side parts standing on two opposite side edges of the bottom parts to form a quadrangular frame in combination with the pair of first side parts so as to surround the bottom part.

3. The rubber mold for molding a resin as set forth in Claim 1 or 2, wherein a mold space for performing at least one of vacuum suction for preventing the mold opening of the plurality of split mold parts and injection of cooling water for cooling the plurality of split mold parts is formed between an external side surface of the plurality of split mold parts in the core mold and an internal side surface of the pair of first side parts in the base mold, and
the mold space is formed while leaving a contact part where the contact state of the external side surface with the internal side surface of the pair of first side parts is maintained.

4. The rubber mold for molding a resin as set forth in any one of Claims 1 to 3, wherein an injection port for injecting the thermoplastic resin into the cavity is provided in an upper position of the splitting surface of the plurality of split mold parts.

5. An apparatus for molding a resin comprising:
the rubber mold for molding a resin as set forth in any one of Claims 1 to 4; and
light generation means for generating light including a wavelength region of from 0.78 to 2 µm,
wherein the apparatus is configured so that the thermoplastic resin to be filled into the cavity may be heated by irradiating the light from the surface of the base mold by the light generation means.

6. An apparatus for molding a resin comprising the rubber mold for molding a resin as set forth in Claim 3, light generation means for generating light including a wavelength region of from 0.78 to 2 µm, vacuum means for performing vacuum suction in the mold space, and water supply means for injecting the cooling water into the mold space,
wherein the apparatus is configured so that at the time of the filling of the thermoplastic resin into the cavity, vacuum suction in the mold space is performed using the vacuum means to perform mold clamping of the plurality of split mold parts and the light is irradiated by using the light generation means from the surface of the base mold to heat the thermoplastic resin to be filled into the cavity and after the filling of the thermoplastic resin, the cooling water is injected into the mold space by using the water supply means to cool the core mold.

7. The apparatus for molding a resin as set forth in Claim 5 or 6, wherein the apparatus for molding a resin has holding means for holding the external surface of the pair of first side parts in the base mold and an injection nozzle for injecting the thermoplastic resin into the cavity.

8. A method for molding a resin, wherein the method comprises using an apparatus for molding a resin comprising the rubber mold for molding a resin as set forth in any one of Claims 1 to 4 and light generation means for generating light including a wavelength region of from 0.78 to 2 µm, and performing a heating step of irradiating the light by using the light generation means from the surface of the base mold to heat the thermoplastic resin to be filled into the cavity.

9. A method for molding a resin, comprising:
using an apparatus for molding a resin comprising the rubber mold for molding a resin as set forth in Claim 3, light generation means for generating light including a wavelength region of from 0.78 to 2 µm, vacuum means for performing vacuum suction in the mold space, and water supply means for injecting the cooling water into the mold space, and
performing a heating step of, at the time of the filling of the thermoplastic resin into the cavity, performing the vacuum suction in the mold space by using the vacuum means to perform mold clamping of the plurality of split mold parts and irradiating the light by using the light generation means from the surface of the base mold to heat the thermoplastic resin to be filled into the cavity and,
subsequently, performing a cooling step of, after the filling of the thermoplastic resin, injecting the cooling water into the mold space by using the water supply means to cool the core mold.

10. The method for molding a resin as set forth in Claim 8 or 9, wherein in the heating step, a thermoplastic resin in a particle state is charged into the cavity, subsequently the light is irradiated from the surface of the base mold by the light generation means, thereby heating the thermoplastic resin in the particle state in the cavity to melt, and subsequently a thermoplastic resin in a molten state is filled into a space remaining in the cavity.
